# EUROPÄISCHE PATENTSCHRIFT

(11) **EP 2 052 844 B1**
(45) Veröffentlichungstag und Bekanntmachung des Hinweises auf die Patenterteilung: **19.05.2010**
(21) Anmeldenummer: 08017690.2
(22) Anmeldetag: 09.10.2008
(51) Int. Cl.: B29C 51/10

(54) **Verfahren zur Umformung einer Folie**
Method for shaping a film
Procédé de déformation d'une feuille

(30) Priorität: 25.10.2007 DE 102007050976
(43) Veröffentlichungstag der Anmeldung: 29.04.2009
(73) Patentinhaber: Karlsruher Institut für Technologie, 76131 Karlsruhe (DE)
(72) Erfinder: Truckenmüller, Roman, Dr., 74223 Flein (DE); Giselbrecht, Stefan, Dr., 76187 Karlsruhe (DE)
(74) Vertreter: Rückert, Friedrich

(56) Entgegenhaltungen:
- EP-A- 1 367 438
- WO-A-03/068612
- DE-B3-102004 035 267
- JP-A- 2006 103 297

## Beschreibung

Die Erfindung betrifft ein Verfahren zur Umformung einer Folie, die auch als Membran bezeichnet wird und die eine Dicke von 0,1 µm bis 1000 µm aufweist.

Dünne Folien spielen in der Mikro- und Nanotechnik und in den meisten Anwendungsgebieten dieser Bereiche, insbesondere den Lebenswissenschaften, eine wichtige Rolle. Nach C. Zhang, D. Xing und Li, Y., Micropumps, microvalves, and micromixers within PCR microfluidic chips: Advances and trends, Biotechnology Advances 25, 483-514 (2007) bilden Membranen aus organischen Materialien (z.B. Polymere) oder aus anorganischen Materialien (z.B. Silizium) die zentralen Elemente in Mikrosensoren und Mikroaktoren wie z. B. Mikropumpen, Mikroventilen und Nano-/Mikrodosiersystemen.

Für Zellkulturen werden poröse Polymermembranen seit Jahren erfolgreich eingesetzt. Beispiele hierfür finden sich in M.M. Woo, C.M. Salamanca, A. Minor und N. Auersperg, An improved assay to quantitate the invasiveness of cells in modified Boyden chambers, In Vitro Cell Dev Biol Anim 43, 7-9 (2007) und in N. Sakamoto, T. Ohashi und M. Sato, Effect of fluid shear stress on migration of vascular smooth muscle cells in cocultured model, Ann Biomed Eng 34, 408-15 (2006).

Nach D. Ma und A.J. McHugh, The interplay of phase inversion and membrane formation in the drug release characteristics of a membrane-based delivery system, Journal of Membrane Science 298, 156-168 (2007) spielen dünne Folien im biomedizinischen Bereich für die Herstellung von so genannten *drug delivery devices*, die eine kontrollierte Freisetzung von Wirkstoffen ermöglichen, eine entscheidende Rolle.

Während im Makroskopischen die Innenkonturen und -flächen von Negativformwerkzeugen relativ einfach, z. B. mit 5-Achs CNC-Maschinen, in gewünschter Weise bearbeitet werden können, ist dies im Bereich von Mikro- und Nanoskalen kaum möglich. Es können zwar isotrop wirkende Prozesse wie z.B. Plasmabehandlungen oder Tauchbeschichtungen eingesetzt werden, eine definierte Oberflächentextur oder Topologie lässt sich damit aber nicht erzielen. Anisotrope Prozesse, wie z. B. lithographische Verfahren, eignen sich zwar hierzu, allerdings aufgrund des durch die kleinskalige Struktur erzwungenen Abstands zwischen der Maske und zu bearbeitender Fläche ist die lateral erreichbare Auflösung von Strukturen sehr stark eingeschränkt.

Im Bereich von Mikro- und Nano-Skalen spielen Materialmodifikationen und insbesondere Oberflächenmodifikationen eine bedeutende Rolle. Der Grund hierfür ist, dass Oberflächeneffekte mit Abnahme der Strukturgröße mehr und mehr die Eigenschaften solcher Bauteile dominieren. Für die Funktionalität solcher Strukturen ist es häufig unerlässlich, dass nicht alle Materialbereiche die gleichen Eigenschaften aufweisen, sondern verschiedene Bereiche auch unterschiedliche Eigenschaften, wie z. B. Benetzungseigenschaften, aufweisen. Da die Modifikation des Materials und der Formvorgang in aller Regel getrennt und sequentiell durchgeführt werden muss, ist es erforderlich, die beiden Prozesse positioniert zueinander durchzuführen. Je kleiner die Strukturen, desto aufwendiger und schwieriger wird es jedoch, ortsaufgelöst die Materialeigenschaften zu verändern. Zudem gestalten sich die Handhabung der sehr kleinen Strukturen und damit die kontrollierte Positionierung in nacheinander geschalteten Prozessschritten als schwierig.

Typische Verfahren, um dünne Membranen herzustellen, sind Abscheidungen aus der Dampf- oder Gasphase auf Substrate mit zumindest teilflächig ausgestatteten Trennschichten, Aufschleudern, Extrusion oder Ätzen. Nachteil dieser Verfahren ist, dass Sie nur begrenzt die Herstellung von dreidimensional strukturierten Membranen zulassen bzw. zudem häufig sehr aufwendig sind. Gängige Verfahren der Kunststoff-Mikroreplikation, z. B. Mikrospritzguss, ermöglichen zwar die Herstellung großer Stückzahlen mikrostrukturierter Teile, jedoch sind großflächig dünnwandige Teile hierbei nur begrenzt möglich.

Das *Mikrothermoformen* ist ein mikrostrukturtechnisches Verfahren, um großflächig dünnwandige mikrostrukturierte Teile herzustellen. *Thermoformen* bezeichnet das Formen von erwärmten und daher erweichten, an ihrem Rand fest eingespannten thermoplastischen Halbzeugen in Form von Folien und Platten durch dreidimensionales Verstrecken. Durch das Streckformen kommt es bei dem fest eingespannten Zuschnitt zu einer Ausdünnung der Ausgangswanddicke. Das mikrotechnische Thermoformen oder Mikrothermoformen ist eine Adaption des makroskopischen Trapped Sheet *Formings* in Form eines *High Pressure Forming* Prozesses.

Gemäß der DE 10 2004 035 267 B3 und S. Giselbrecht et al., 3D tissue culture substrates produced by microthermoforming of pre-processed polymer films, Biomed Microdevices 8, 191 (2006) wird dieses Verfahren zusammen mit Ionenspurtechnologie eingesetzt, um ausgehend von dünnen Kunststofffolien hoch poröse Mikrocontainer-Arrays im Chipformat für die dreidimensionale Kultivierung biologischer Zellen zu fertigen. Die extreme Dünnwandigkeit, die im Bodenbereich der Mikrocontainer geringer als 10 µm ist, wird durch Negativformen sichergestellt. Dies bietet gute Voraussetzungen für die immer wichtiger werdenden Imaging-Methoden (z.B. Fluoreszenz-Mikroskopie) zur Charakterisierung der darin kultivierten Zellen.

Die hierfür erforderliche ebene und extrem glatte Oberfläche der transparenten Folien am Boden mikro- oder nanoskaliger Kavitäten ist jedoch nur schwer herzustellen. Andererseits sind auch definierte Texturen und Topologien, wie sie im Makroskopischen durch eine eingearbeitete Oberflächentextur im Werkzeug aufgrund der guten Zugänglichkeit einfach erzeugt werden können, mit mikro- oder nanostrukturierten Formwerkzeugen vergleichsweise schwierig herzustellen.

In beiden Fällen, d.h. glatter unstrukturierter oder definiert texturierter Boden, ist nur eine begrenzte Zugänglichkeit des Bodens bei der Herstellung in den Formkavitäten möglich und es können nur begrenzt Verfahren eingesetzt werden, um diese entsprechend hochauflösend zu erzeugen. Eine vergleichsweise kostengünstige Fertigung eines Negativwerkzeuges z.B. mittels Mikromechanik bedeutet aber, dass stirnseitig an den Mikrokavitäten mit dem jeweiligen Fräser oder Bohrer nur vergleichsweise große Rauhigkeiten erzielt werden können, die sich während des Formvorgangs in die erweichte Folie einprägen.

Ein komplexes Problem im Bereich der Mikro- und Nanotechnologie stellt die sequentielle aber zueinander positionierte Bearbeitung von Bauteilen dar. Während im Makroskopischen das Wiederauffinden von Strukturdetails und die Ausrichtung von neuen Bearbeitungswerkzeugen vergleichsweise einfach möglich sind, erfordert dies im Mikro- und Nanobereich äußerste Präzision und stellt somit bei der Herstellung größerer Stückzahlen einen nicht unerheblichen Kostenfaktor dar.

Weiterhin müssen derzeit die vergrabenen Strukturen eines Negativformwerkzeuges vor dem Formvorgang evakuiert werden, damit ein ausreichendes Einformen der Folie möglich wird. Der Einsatz von Entlüftungsbohrungen, wie sie nach J. L. Throne, M. Heil und J. Beine, Thermoformen, Hanser, München, 1999, im Makroskopischen vergleichsweise einfach in das Werkzeug integriert werden können, ist bei Geometrien im Mikro- oder Nanometermaßstab nahezu ausgeschlossen, da die Bohrungen einerseits so klein sein müssen, damit sie sich nicht mehr auf der Folie abzeichnen, andererseits können für derartig kleine Entlüftungsbohrungen mit den vorhandenen Technologien keine ausreichend hohen Aspektverhältnisse, d.h. eine ausreichende Tiefe der Bohrungen, erzielt werden, um eine Abführung des eingeschlossen Luftpolsters nach außen zu ermöglichen.

Aus S. Giselbrecht, Polymere mikrostrukturierte Zellkulturträger für das Tissue-Engineering, Dissertation, Universität Karlsruhe (TH), 2005, ist ein Verfahren zur Herstellung einer Membran bekannt, worin die Negativform nicht in eine massive Werkzeugplatte, sondern in eine so genannte *Formkulisse* eingearbeitet wird, wobei die Dicke der Formkulisse derart gewählt wird, dass die der Tiefe der Mikrokavitäten entspricht.

Die Aufgabe der vorliegenden Erfindung besteht darin, ein Verfahren zur Umformung einer Folie, die eine Dicke von 0,1 µm bis 1000 µm aufweist, anzugeben, das die oben genannten Nachteile nicht aufweist.

Insbesondere soll dieses Verfahren eine Oberflächen-Modifikation von ausgewählten Bereichen auf der Folie und/oder in ihrem Inneren ermöglichen, die in definierter Position in Bezug zum Umformvorgang stehen. Außerdem soll dieses Verfahren die Oberflächen-Modifikation von Bereichen der Folie ermöglichen, die eine gestufte Form oder einen Hinterschnitt aufweisen.

Gelöst wird diese Aufgabe durch die Merkmale des Patentanspruchs 1. Die übrigen Ansprüche bzw. die Unteransprüche beschreiben jeweils vorteilhafte Ausgestaltungen der Erfindung.

Zur Durchführung des erfindungsgemäßen Herstellungsverfahrens wird in einem ersten Verfahrensschritt a) eine umzuformende Folie bereitgestellt, die eine Dicke von 0,1 µm bis 1000 µm, bevorzugt von 10 µm bis 500 µm, besonders bevorzugt von 20 µm bis 100 µm aufweist.

Vorzugsweise besteht die umzuformende Folie aus einem Kunststoff oder einem Gemisch aus Kunststoffen, wobei als Kunststoff insbesondere ein Thermoplast, ein thermoplastisches Elastomer oder ein Thermoelast eingesetzt wird. Die Folie selbst kann mit Verstärkungs- oder Füllstoffen gefüllt sein.

In einem zweiten Verfahrensschritt b) wird die umzuformende Folie derart fest mit einer Formkulisse, die einen oder mehrere Durchbrüche aufweist, verbunden, dass die Folie und die Formkulisse zumindest bis zu Verfahrensschritt f) fest zueinander positioniert bleiben. Dies kann z.B. durch Auflaminieren, Kleben oder Klemmenerfolgen. Die Formkulisse dient damit der erleichterten Positionierung der Folie für die anschließende Modifikation der Folie in Bezug auf deren spätere Form.

In einer besonderen Ausgestaltung ist der mindestens eine Durchbruch der Formkulisse derart ausgestaltet, dass zumindest ein Teilbereich der Form mit einem Hinterschnitt geformt wird. Auf diese Weise lassen sich in dünnen Folien sogar modifizierte Bereiche mit einem Hinterschnitt herstellen.

Hieran anschließend wird die umzuformende Folie in Verfahrensschritt c) einer physikalischen und/oder chemischen Modifikation in ausgewählten Bereichen unterzogen. Hierunter wird jede Änderung der physikalischen bzw. chemischen Eigenschaften der Oberfläche bzw. des Innern der umzuformenden Folie verstanden, die durch ein über die Oberfläche der Folie einwirkendes physikalisches und/oder chemisches Verfahren verursacht wird.

Ein hierfür besonders geeignetes Verfahren ist die Bestrahlung von Bereichen der umzuformenden Folie mit ionisierender Strahlung insbesondere mit elektromagnetischen Strahlen wie Ultraviolett-Strahlung oder mittels Teilchenstrahlen wie energiereichen Schwerionen.

Weitere geeignete Verfahren sind Ätzverfahren, insbesondere das chemische Nassätzen oder das Plasmaätzen, oder chemische oder physikalische Beschichtungsverfahren (CVD, PVD, ...).

Ein weiteres geeignetes Modifikations-Verfahren ist das mechanische Einbringen einer Textur oder Topologie in die umzuformende Folie.

In einer bevorzugten Ausgestaltung erfolgt hierbei das Einbringen durch die besonders gestaltete Basisplatte, indem deren zum Gegenwerkzeug hin gerichtete Seite eine Textur oder eine Topologie aufweist, die während Verfahrensschritt e) zumindest teilweise in die umzuformende Folie eingebracht wird. Das Einbringen einer Textur oder Topologie in die umzuformende Folie kann insbesondere zusätzlich zu einer weiteren Modifikation etwa durch Bestrahlung erfolgen.

Unter Textur wird eine Struktur auf einer Oberfläche verstanden, deren Höhe über der Oberfläche von 1 nm bis 100 nm beträgt.

Unter Topologie wird eine Struktur auf einer Oberfläche verstanden, deren Höhe über der Oberfläche mindestens 100 nm beträgt und die nur durch die Abmessungen der Durchbrüche der Formkulissen begrenzt wird.

Hierdurch wird insbesondere auch die Herstellung einer kombinierten Positiv-/Negativform durch Ineinandergreifen von Basisplatte in die Durchbrüche der Formkulisse ermöglicht.

In einer besonders bevorzugten Ausgestaltung erfolgt das physikalische und/oder chemische Modifizieren von Bereichen der umzuformenden Folie (durch den mindestens einen Durchbruch der Formkulisse, die in diesem Falle gleichzeitig die Funktion einer (Abschattungs-)Maske besitzt, hindurch. Auf diese Weise lassen sich insbesondere diejenigen Bereiche, die an die Formkulisse anliegen und die sich dort in dem mindestens einen Durchbruch der Formkulisse befinden (so genannte Außenseite), modifizieren.

In einer alternativen Ausgestaltung erfolgt das physikalische und/oder chemische Modifizieren von Bereichen der umzuformenden Folie durch mindestens einen Durchbruch einer gesondert bereitgestellten (Abschattungs-)Maske, die in Bezug auf die Formkulisse auf der gegenüberliegenden Seite der umzuformenden Folie aufgebracht ist, hindurch. Auf diese Weise lassen sich insbesondere diejenigen Bereiche, die nicht an die Formkulisse anliegen (so genannte Innenseite), modifizieren.

Die mindestens teilweise zumindest auf ihrer Oberfläche modifizierte und mit der der Formkulisse verbundene umzuformende Folie wird nun gemäß Verfahrensschritt d) in ein geöffnetes Formwerkzeug, das mindestens eine Basisplatte und ein ihr gegenüberliegendes Gegenwerkzeug umfasst, eingelegt. Hierbei wird die mit der Formkulisse verbundene umzuformende Folie derart in das geöffnete Formwerkzeug zwischen die Basisplatte und das Gegenwerkzeug eingelegt, dass die Folie zum Gegenwerkzeug hin gerichtet ist. Das Formwerkzeug stellt eine negative oder eine kombinierte negativ-positive Form dar.

Das Formwerkzeug kann darüber hinaus mindestens eine weitere Formkulisse, die ebenfalls mindestens einen Durchbruch besitzt, aufweisen. In diesem Fall wird die mindestens eine weitere Formkulisse zwischen der mit der umzuformenden Folie verbundenen Formkulisse und der Basisplatte in das Formwerkzeug eingelegt. Diese Ausgestaltung ist insbesondere dann von Vorteil, wenn die Durchbrüche der eingesetzten Formkulissen derart ausgestaltet sind, dass sich zusammen mit der Basisplatte für die Konturen, in die die umzuformende Folie hineingeformt wird, eine gestufte Form mit oder ohne Hinterschnitt ergibt.

In einer besonderen Ausgestaltung werden die Formkulissen und die Basisplatte beim Einlegen in das Formwerkzeug fest miteinander verbunden und damit fest zueinander positioniert. Dies kann z.B. durch entsprechend ausgestaltete Führungen erfolgen.

Die zum Gegenwerkzeug hin gerichtete Seite der Basisplatte ist glatt oder weist eine oben beschreiben Textur oder Topologie auf. Ist die Basisplatte glatt, d.h. ist sie unstrukturiert und weist sie nur minimale Rauhigkeitswerte auf, erfährt auch die Folie während des Umformens keine Erhöhung ihrer eigenen Oberflächenrauhigkeit.

Die Basisplatte und die Formkulissen können aus demselben Material oder auch aus unterschiedlichen Materialien bestehen. Bevorzugte Materialien sind Metalle (Messing, Aluminium oder Stahl), Halbleiter (Silizium), Keramiken oder Kunststoffe (Thermoplaste, Thermoelast oder Duroplast).

Hieran anschließend erfolgen gemäß Verfahrensschritt e) das Schließen des Formwerkzeugs und das Umformen der umzuformenden Folie mittels eines ersten Druckmediums. Das erste Druckmedium, das bevorzugt Gas ist, formt die umzuformende Folie zumindest teilweise in den mindestens einen Durchbruch der Formkulisse ein, so dass die umgeformte Folie zumindest teilweise die Gestalt des mindestens einen Durchbruchs annimmt, wodurch Kavitäten in der Folie gebildet werden. Das sich in den Durchbrüchen befindliche zweite gasförmige oder flüssige Druckmedium entweicht durch den explizit strukturierten oder implizit bestehenden Spalt zwischen den einzelnen Modulen (Basisplatte, Gegenwerkzeug, Formkulissen) des Formwerkzeuges. Dieser Vorgang kann dadurch unterstützt werden, dass durch diesen Spalt evakuiert wird.

Entlüftungsbohrungen, wie sie im makroskopischen Bereich üblich und leicht zu realisieren sind, können bei diesen Strukturabmessungen am Strukturgrund (in den Ecken und Kanten), wo sie üblicherweise lokalisiert sind, nicht mehr erzeugt werden.

Dadurch, dass es sich bei dem hier beschriebenen Verfahren nicht um am Grund geschlossene Sacklöcher handelt, sondern die Strukturen durch zwei oder mehrere gestapelte Platten gebildet werden, besteht entweder im Bereich der ungedichteten Trennebenen zwischen den Platten aufgrund der endlichen Oberflächenrauhigkeit der Platten ein Schlitz, über den die Luft oder das in den Durchbrüchen befindliche Medium nach außen entweichen kann, oder in die Oberflächen der Basisplatte oder Formkulissen sind explizit Kanalstrukturen eingearbeitet, durch die das Medium entweichen kann. Diese Strukturen können mit etablierten Verfahren der Nano- und Mikrotechnik sehr klein gefertigt werden, da die Oberflächen der einzelnen Module separat gut zugänglich sind und somit mit allen bekannten Strukturierungsverfahren erzeugt werden können.

Zusätzlich zu einem passiven Entweichen lässt sich das Medium aus den Durchbrüchen während des Formvorgangs aktiv durch die Schlitze bzw. Kanäle absaugen, wenn dies etwa die Dynamik des Einformvorgangs erfordern würde. Auf dieser Basis kann der Schritt der Evakuierung mit diesem Verfahren grundsätzlich entfallen, was vor allem bei einer Hochdurchsatzfertigung von Rolle zu Rolle von mikro- oder nanoskaligen Membranstrukturen einen großen Vorteil bietet. Darauf basierende Miroarrays lassen sich kostengünstig in großen Stückzahlen herstellen.

Während des Umformens befindet sich die Folie in einem erweichten, kautschuk-, gummi-, entropie- oder thermoelastischen Zustand. In einer bevorzugten Ausgestaltung erfolgt das Umformen der Folie daher im Bereich der Glasübergangstemperatur bzw. geringfügig unterhalb der Schmelztemperatur des Folienmaterials. In diesem Fall weisen die Formkulisse und die Basisplatte entsprechende Einrichtungen zur Heizung bzw. Kühlung auf. In einer besonderen Ausgestaltung werden Formkulisse und Basisplatte unabhängig voneinander beheizt und gekühlt.

Schließlich wird gemäß Verfahrensschritt f) die mit der Formkulisse verbundene, aber nunmehr umgeformte Folie zusammen mit der Formkulisse aus dem modularen Formwerkzeug entnommen. Die Folie ist also sowohl für eine Vorbehandlung vor dem Formprozess als auch für eine Nachbehandlung nach dem Formprozess fest, aber reversibel mit der vergleichsweise stabilen Formkulisse verbunden. Dadurch sind ein Transport und eine Überführung der ansonsten schwierig zu handhabenden Strukturen von Prozessschritt zu Prozessschritt deutlich vereinfacht.

In einer besonderen Ausgestaltung besitzt die Formkulisse ein Endlosformat und dient gleichzeitig als Transportband bei einer Hochdurchsatzfertigung von thermogeformten Mikro- oder Nanostrukturen von Rolle auf Rolle bzw. für nachfolgende Prozesse oder Anwendungen.

In einer bevorzugten Ausgestaltung wird während oder nach Verfahrensschritt f) die umgeformte Folie von der Formkulisse getrennt, so dass die Folie unabhängig von der Formkulisse transportiert und eingesetzt werden kann. Damit lässt sich insbesondere die Formkulisse in einer weiteren Ausführung des erfindungsgemäßen Verfahrens wiederverwenden.

Ein besonderer Vorteil des vorliegenden Verfahrens ist, dass die Basisplatte, die im Formwerkzeug die Böden der Kavitäten bildet, unabhängig im Vorfeld bearbeitet werden kann und somit die plane Oberfläche auch für hoch auflösende mikro- und nanotechnologische Verfahren gut zugänglich ist. Auf diese Weise können z. B. sehr kleine regelmäßige Texturen oder Topologien am Boden der Kavitäten erzeugt werden, die sich beim Formvorgang in die Außenseite der erweichten Folie beim Werkzeugkontakt übertragen und die in einem abgeformten, transparenten Teil z.B. auf der Außenseite der geformten Folie z.B. als Wiederfindungsgitter für mikroskopische Anwendungen genutzt werden können, ohne direkten Einfluss auf das Zellverhalten zu nehmen. Derartige Strukturen sind hilfreich bei der Anwendung von automatisierten, mikroskopischen Hochdurchsatz-Screenings.

Für hoch auflösende oder quantifizierende mikroskopische Anwendungen sind in der Regel reproduzierbar sehr plane und möglichst glatte transparente Bodenflächen erforderlich, die nur einen minimalen oder möglichst keinen Einfluss auf den Lichtweg nehmen. Hierzu müssen hoch polierte Flächen mit geringsten Rauhigkeitswerten am Boden dieser kleinstskaligen Kavitäten des Formwerkzeuges erzeugt werden, so dass sich keine Rauhigkeiten des Formwerkzeuges auf die erweichte Folie übertragen. Auch in diesem Fall bietet das erfindungsgemäße Verfahren deutliche Vorteile, da die Basisplatte separat mit etablierten Methoden zur Reduzierung der Oberflächenrauhigkeit, wie z. B. dem flächigen Polieren, bearbeitet werden kann.

Weiterhin besteht die Möglichkeit durch den Einsatz von weiteren, übereinander gestapelten Formkulissen vergleichsweise einfach gestufte Formkavitäten aufzubauen. Während dies z.B. mit mikromechanischen Methoden relativ gut zu realisieren ist, ist der Aufwand bei der Verwendung von lithografischen Verfahren zur Erzeugung von gestuften Formen deutlich größer. Durch das Stapeln von Formkulissen können jedoch die einzelnen Ebenen getrennt voneinander und mit nur geringen Aspektverhältnissen hergestellt werden und die verschiedenen Ebenen können zudem sehr einfach mit unterschiedlichen Rauhigkeit, Texturen oder Topologien ausgestattet werden. Zusätzlich lassen sich auf diese Weise auch Hinterschnitte herstellen.

Der Vorteil der erfindungsgemäßen Verfahrens besteht darin, dass die Formkulisse mit ihren Durchbrüchen einerseits als Maske für die Prozesse zur Materialmodifikation selbst eingesetzt oder andererseits als Positionierungshilfe insbesondere für Vorbehandlungen genutzt werden kann. Z.B. kann für die Herstellung von porösen thermogeformten Mikrostrukturen gemäß der DE 10 2004 035 267 C1 die Formkulisse gleichzeitig als Bestrahlungsmaske beim Bestrahlen der noch planen Folie mit beschleunigten Schwerionen dienen. Besitzt die Formkulisse eine entsprechende Dicke und das Material eine entsprechende Ordnungszahl, werden nur diejenigen Bereiche der Folie bestrahlt und modifiziert, die die Stirnflächen der später geformten Mikrokavitäten darstellen. Somit befinden sich die so genannten latenten Ionenspuren nach dem Einformen dieser Stirnflächenbereiche in die durch die positionierte Formkulisse und Basisplatte gebildete Formkavität nur in den Bereichen der dreidimensional verformten Folie, also den Mikrokavitäten. Auf diese Weise besitzen die Flächen der Folie zwischen den Kavitäten nach dem Ätzen der latenten Spuren zu Poren keine Perforation, während die Kavitäten selbst porös sind.

Durch die Oberflächenmodifikation vor dem Formprozess kann die mit der Folie fest, aber reversibel verbundene Formkulisse auch als Positionierhilfe genutzt werden. Mittels der Formkulisse ist eine einfache Positionierung einer entsprechende strukturierten planen Maske, z.B. für eine lateral hoch aufgelöste UV-Bestrahlung, auf der zur Formkulisse entgegengesetzten Oberfläche der Folie möglich. Auf diese Weise können z.B. mikro- oder nanostrukturierte Zelladhäsionsmuster in diesen Membranstrukturen genau sowie vergleichsweise schnell und einfach positioniert erzeugt werden.

Weitere Vorteile die sich aus dem erfindungsgemäßen Verfahren ergeben, sind, dass einerseits eine Evakuierung entfallen kann und die Entformung derart fragiler und dünnwandiger Teile vereinfacht werden kann. Bei allen gängigen Kunststoffreplikationsverfahren, wie z. B. Mikrospritzguss oder Heißprägen, ist eine Evakuierung der Formkavitäten unumgänglich, um eine vollständige Füllung der Strukturen mit der Formmasse zu ermöglichen und um Lufteinschlüsse zu vermeiden. Deutlich erschwert wird dies dadurch, dass in diesem Größenbereich keine (verschließbaren) Entlüftungsbohrungen, die ja deutlich kleiner sein müssten als die eigentlichen Strukturen, in den Mikro- oder Nanostrukturen selbst erzeugt werden können, sondern immer das ganze Werkzeug hierzu vor dem Formvorgang evakuiert werden muss. Dies hat einen erheblichen Einfluss auf die Zykluszeit solcher Verfahren. Das gleiche Problem stellt sich auch beim Thermoformen von Mikro- oder Nanostrukturen.

Der Aufbau des eingesetzten Formwerkzeugs bietet außerdem große Vorteile bei der Entformung kleinskaliger Bauteile. Durch die Kanäle oder Schlitze, die für das Entweichen des zweiten Druckmediums aus denn Durchbrüchen während des Formvorgangs dienen, kann beim Entformvorgang z.B. ein weiteres Druckmedium beaufschlagt werden, das die Entformung der Strukturen deutlich erleichtert. Weiterhin können die Module beim Entformvorgang auseinander gefahren werden, so dass die Strukturen weitgehend automatisch aus der Form entrückt werden. Auf diese Weise lassen sich in diesen Skalen Auswerferstifte ersetzen, wie sie im Makroskopischen zwar häufig eingesetzt werden, aber in diesen Größenbereichen kaum realisierbar sind.

Die Erfindung wird im Folgenden anhand von Ausführungsbeispielen und den Figuren näher erläutert. Hierbei zeigen:
- **Fig. 1**: Schematischer Ablauf des erfindungsgemäßen Verfahrens
- **Fig. 2**: Variante des erfindungsgemäßen Verfahrens mit Trennung der umgeformten Folie von der Formkulisse
- **Fig. 3**: Weitere Variante des erfindungsgemäßen Verfahrens mit Bestrahlung der Folie durch eine gesonderte Maske
- **Fig. 4**: Weitere Variante des erfindungsgemäßen Verfahrens mit einer weiteren Formkulisse zur Erzeugung von Hinter-schnitten

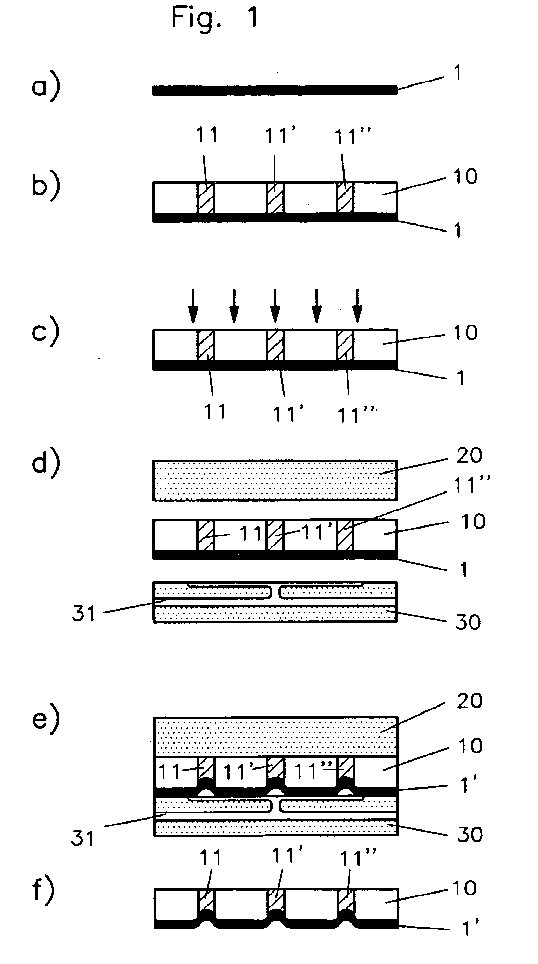

In **Fig. 1** ist der Ablauf des erfindungsgemäßen Verfahrens schematisch dargestellt. **Fig. 1a** zeigt die Bereitstellung einer umzuformenden Folie **1.** In **Fig. 1b** ist das Verbinden der umzuformenden Folie **1** mit einer Formkulisse **10,** die die Durchbrüche **11, 11', 11 "** aufweist, dargestellt. Die Folie **1** und die Formkulisse **10** bleiben bis **Fig. 1e** fest miteinander verbunden. **Fig. 1c** zeigt das physikalische Modifizieren von Bereichen der umzuformenden Folie **1** mittels Bestrahlung der Folie 1, wobei die Formkulisse **10** als Maske dient.

Gemäß **Fig. 1d** wird die mit der Formkulisse **10** verbundene physikalische modifizierte umzuformende Folie **1** in ein geöffnetes Formwerkzeug aus einer Basisplatte **20** und einem ihr gegenüberliegenden Gegenwerkzeug **30** eingeführt. **Fig. 1e** zeigt das Schließen des Formwerkzeugs und das Umformen der umzuformenden Folie **1,** wobei das erste Druckmedium, das die umzuformende Folie teilweise in die Durchbrüche **11, 11', 11"** der Formkulisse **10** einformt, über Kanäle **31** in der Gegenplatte **30** appliziert wurde. Die umgeformte Folie **1'** nimmt hierbei teilweise die Gestalt der Durchbrüche **11, 11', 11"** an und bildet entsprechende Kavitäten aus. Schließlich wird in **Fig. 1f** die mit der Formkulisse 10 verbundene umgeformten Folie **1'** aus dem modularen Formwerkzeug entnommen.

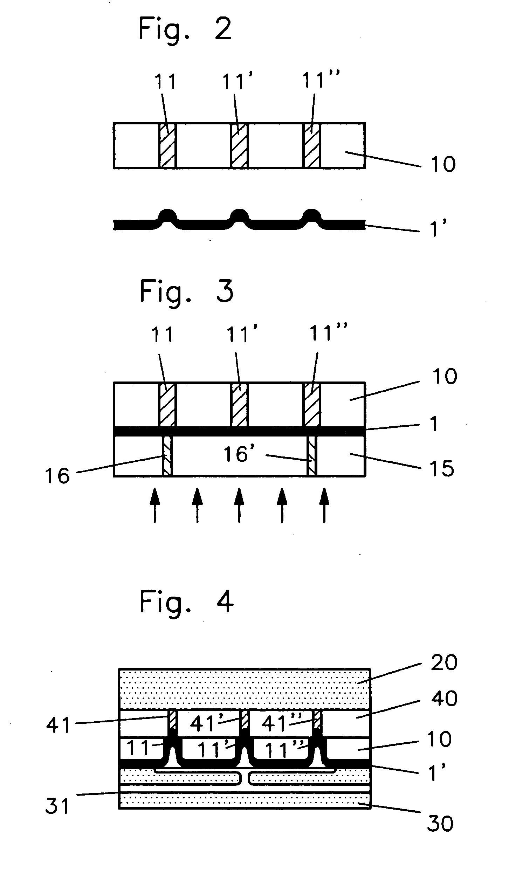

**Fig. 2** zeigt eine erste Variante des erfindungsgemäßen Verfahrens. In dieser Ausgestaltung wird im Anschluss an den Verfahrensschritt f), der in **Fig. 1f** schematisch dargestellt ist, die umgeformte Folie **1'** von der Formkulisse **10** durch Entformen abgetrennt und gesondert weiterverwendet.

**Fig. 3** zeigt eine weitere Variante des erfindungsgemäßen Verfahrens. In dieser Ausgestaltung wird Verfahrensschritt c), der in **Fig. 1c** schematisch dargestellt ist, derart ausgeführt, dass die Bestrahlung als Verfahren zur physikalischen bzw. chemischen Modifikation von Bereichen der umzuformenden Folie **1** durch die Durchbrüche **16, 16', 16"** einer Maske **15** erfolgt, die in Bezug auf die Formkulisse 10 auf der gegenüberliegenden Seite der umzuformenden Folie **1** aufgebracht ist, von der aus auch die Bestrahlung der Folie **1** durchgeführt wird.

**Fig. 4** zeigt eine weitere Variante des erfindungsgemäßen Verfahrens. In dieser Ausgestaltung wird Verfahrensschritt e), der in **Fig. 1e** schematisch dargestellt ist, derart ausgeführt, dass das Formwerkzeug, in die die mit der ersten Formkulisse 10 fest verbundene Folie 1 eingelegt wird, eine weiteren Formkulisse **40** mit den Durchbrüchen **41, 41', 41"** aufweist. Dadurch, dass die Durchbrüche **41, 41', 41"** auf die in **Fig. 4** dargestellte Art und Weise in Bezug auf die Durchbrüche **11, 11', 11"** der Formkulisse **10** angeordnet sind, lassen sich mit dieser Ausgestaltung Hinterschnitte in die Folie einformen.

Zur Durchführung des erfindungsgemäßen Verfahrens wurde eine 50 µm dicke Polycarbonat-Folie in eine heizbare Presse eingelegt, die mit einem für das erfindungsgemäße Verfahren geeigneten Formwerkzeug ausgerüstet war. Als Formkulisse **10** diente eine 500 µm dicke Messingfolie, die zentral eine Anzahl von 25 x 25 Bohrungen, die jeweils einen Durchmesser von 350 µm besaßen und in Reihen und Spalten mit einem Rastermaß von 400 µm angeordnet waren, als Durchbrüche aufwies. Die Folie 1 und die Formkulisse **10** waren durch Auflaminieren fest miteinander verklammert.

Die Folie **1** und die mit ihr verbundene Formkulisse **10** wurden gemeinsam in das Formwerkzeug zwischen die Basisplatte **20** und der Gegenplatte **30** gelegt. Als Basisplatte **20** diente eine hochglatte, unstrukturierte, plane Messingplatte; als Gegenwerkzeug **30** eine Messingplatte mit Kanälen **31** und einer zentralen Öffnung für die Applikation des ersten Druckmediums. Die Basisplatte **10** wurde dann mit hoher Kraft auf die mit der Formkulisse **10** verbundene Folie **1** gepresst. Das Werkzeug wurde anschließend auf eine Formtemperatur von etwa 167°C aufgeheizt.

Danach wurde die Folie **1** einseitig mit Stickstoff mit einem Druck von ca. **5** MPa beaufschlagt, wodurch die Folie in die durch in der Formkulisse **10** vorhandenen Durchbrüche durch Verstreckung eingeformt wurde. Das Luftpolster in den Durchbrüchen wurde durch den Einformvorgang der Folie in die Durchbrüche durch einen Spalt zwischen der Formkulisse **10** und der Basisplatte **20** nach Außen verdrängt.

Nach dem Abkühlen wurde die Basisplatte **20** entfernt und die umgeformte Folie (Membran) **1'** einschließlich der Formkulisse **10** entnommen und anschließend entformt. Die in der umgeformten Folie **1'** gebildeten Kavitäten wiesen bei den genannten Formparametern eine Tiefe von ca. 300 µm auf.

## Patentansprüche

1. Verfahren zur Umformung einer Folie, die eine Dicke von 0,1 µm bis 1000 µm aufweist, umfassend die folgenden **Verfahrensschritte:**
a) Bereitstellen einer umzuformenden Folie (1),
b) Verbinden der umzuformenden Folie (1) mit einer Formkulisse (10), die mindestens einen Durchbruch (11) aufweist, so dass die Folie (1) und die Formkulisse (10) zumindest bis zu Verfahrensschritt f) fest zueinander positioniert bleiben,
c) Physikalisches oder chemisches Modifizieren von Bereichen der umzuformenden Folie (1),
d) Einlegen der mit der Formkulisse (10) verbundenen umzuformenden Folie (1) in ein geöffnetes Formwerkzeug, das mindestens eine Basisplatte (20) und ein ihr gegenüberliegendes Gegenwerkzeug (30) umfasst, so dass die mit der Formkulisse (10) verbundene umzuformende Folie (1) derart zwischen die Basisplatte (20) und das Gegenwerkzeug (30) eingelegt wird, dass die Folie (1) zum Gegenwerkzeug (30) hin gerichtet ist,
e) Schließen des Formwerkzeugs und Umformen der umzuformenden Folie (1) mittels eines ersten Druckmediums, das die umzuformende Folie (1) zumindest teilweise in den mindestens einen Durchbruch (11) der Formkulisse (10) einformt, so dass die umgeformte Folie (1') zumindest teilweise die Gestalt des mindestens einen Durchbruchs (11) annimmt, während das sich in dem mindestens einen Durchbruch (11) befindliche zweite gasförmige oder flüssige Druckmedium entweicht,
f) Entnehmen der mit der Formkulisse (10) verbundenen umgeformten Folie (1') aus dem modularen Formwerkzeug.

2. Verfahren nach Anspruch 1, wobei während oder nach Verfahrensschritt f) die umgeformte Folie (1') von der Formkulisse (10) getrennt wird.

3. Verfahren nach Anspruch 1 oder 2, wobei das physikalische oder chemische Modifizieren von Bereichen der umzuformenden Folie (1) durch den mindestens einen Durchbruch (11) der Formkulisse (10) hindurch erfolgt.

4. Verfahren nach Anspruch 1 oder 2, wobei das physikalische oder chemische Modifizieren von Bereichen der umzuformenden Folie (1) durch mindestens einen Durchbruch (16) einer Maske (15) hindurch erfolgt, die in Bezug auf die Formkulisse (10) auf der gegenüberliegenden Seite der umzuformenden Folie (1) aufgebracht ist.

5. Verfahren nach einem der Ansprüche 1 bis 4, wobei das physikalische oder chemische Modifizieren von Bereichen der umzuformenden Folie (1) mittels Bestrahlung mit elektromagnetischen Strahlen oder Teilchenstrahlen erfolgt.

6. Verfahren nach einem der Ansprüche 1 bis 5, wobei ein Formwerkzeug eingesetzt wird, das mindestens eine weitere Formkulisse (40), die mindestens einen Durchbruch (41) besitzt, aufweist, wobei die mindestens eine weitere Formkulisse (40) zwischen die Formkulisse (10) und die Basisplatte (20) in das Formwerkzeug eingelegt wird.

7. Verfahren nach Anspruch 6, wobei mindestens eine weitere Formkulisse (40) eingesetzt wird, die in Bezug auf die Formkulisse (10) derart ausgerichtet wird und deren mindestens ein Durchbruch (41) derart gestaltet ist, dass die umzuformende Folie (1) zumindest teilweise durch den mindestens einen Durchbruch (11) der Formkulisse (10) hindurch in den mindestens einen Durchbruch (41) der mindestens einen weiteren Formkulisse (40) eingeformt wird, so dass die umgeformte Folie (1') zumindest teilweise eine gestufte Form oder einen Hinterschnitt annimmt.

8. Verfahren nach Anspruch 6 oder 7, wobei die Formkulisse (10), die ggf. mindestens eine weitere Formkulisse (40) und die Basisplatte (20) beim Einlegen in das Formwerkzeug fest miteinander verbunden werden.

9. Verfahren nach einem der Ansprüche 1 bis 8, wobei die Basisplatte (20) so gewählt wird, dass deren zum Gegenwerkzeug (30) hin gerichtete Seite glatt ist.

10. Verfahren nach einem der Ansprüche 1 bis 8, wobei die Basisplatte (20) so gewählt wird, dass deren zum Gegenwerkzeug (30) hin gerichtete Seite eine Textur oder eine Topologie aufweist, die während Verfahrensschritt e) zumindest teilweise in die umzuformende Folie (1) übertragen wird.

11. Verfahren nach einem der Ansprüche 1 bis 10, wobei die mindestens eine Formkulisse und die Basisplatte (20) gleichzeitig oder unabhängig voneinander beheizt und gekühlt werden.

12. Verfahren nach einem der Ansprüche 1 bis 11, wobei die umzuformende Folie (1) so gewählt wird, dass sie aus einem Kunststoff oder Kunststoffgemisch besteht.

## Claims

1. Method for shaping a film that has a thickness of between 0.1 µm and 1000 µm, said method comprising the following method steps:
a) preparing a film (1) to be shaped,
b) connecting the film (1) to be shaped to a moulding member (10) that has at least one aperture (11) such that the film (1) and the moulding member (10) remain positioned in a fixed manner one relative to the other at least as far as method step (f),
c) physically or chemically modifying regions of the film (1) to be shaped,
d) inserting the film (1) to be shaped connected to the moulding member (10) into an open moulding tool that includes at least a base plate (20) and a counter tool (30) located opposite it, such that the film (1) to be shaped connected to the moulding member (10) is inserted in such a manner between the base plate (20) and the counter tool (30) that the film (1) is directed towards the counter tool (30),
e) closing the moulding tool and shaping the film (1) to be shaped by means of a first pressure medium that moulds the film (1) to be shaped at least partially into the at least one aperture (11) of the moulding member (10) such that the shaped film (1') takes on at least partially the form of the at least one aperture (11), whilst the second gaseous or liquid pressure medium situated in the at least one aperture (11) escapes,
f) removing the shaped film (1') connected to the moulding member out of the modular moulding tool.

2. Method according to Claim 1, wherein during or after method step f) the shaped film (1') is separated from the moulding member (10).

3. Method according to Claim 1 or 2, wherein the physical or chemical modifying of regions of the film (1) to be shaped is effected through the at least one aperture (11) in the moulding member (10).

4. Method according to Claim 1 or 2, wherein the physical or chemical modifying of regions of the film (1) to be shaped is effected through at least one aperture (16) in a mask (15) which, with reference to the moulding member (10), is applied on the oppositely situated side of the film (1) to be shaped.

5. Method according to one of claims 1 to 4, wherein the physical or chemical modifying of regions of the film (1) to be shaped is effected by means of irradiation using electromagnetic beams or particle beams.

6. Method according to one of Claims 1 to 5, wherein a moulding tool is used that has at least one further moulding member (40) that has at least one aperture (41), wherein the at least one further moulding member (40) is inserted into the moulding tool between the moulding member (10) and the base plate (20) .

7. Method according to Claim 6, wherein at least one further moulding member (40) is used, which, with reference to the moulding member (10), is oriented in such a manner and the minimum one aperture (41) of which is developed in such a manner that the film (1) to be shaped is moulded at least partially through the at least one aperture (11) of the moulding member (10) into the least one aperture (41) of the at least one further moulding member (40), such that the shaped film (1') assumes at least partially a stepped form or an undercut.

8. Method according to Claim 6 or 7, wherein the moulding member (10), where applicable the at least one further moulding member (40) and the base plate (20) are fixedly interconnected when placed into the moulding tool.

9. Method according to one of Claims 1 to 8, wherein the base plate (20) is selected such that its side directed towards the counter tool (30) is smooth.

10. Method according to one of Claims 1 to 8, wherein the base plate (20) is selected such that its side directed towards the counter tool (30) has a texture or a topology that during method step e) is transferred at least partially into the film (1) to be shaped.

11. Method according to one of Claims 1 to 10, wherein the at least one moulding member and the base plate (20) are heated and cooled at the same time or independently of each other.

12. Method according to one of Claims 1 to 11, wherein the film (1) to be shaped is selected such that it is produced from a plastics material or a mixed plastics material.

## Revendications

1. Procédé de transformation d'un film ayant une épaisseur comprise entre 0,1 µm jusqu'à 1000 µm et comprenant les étapes de procédé suivantes :
a) on fournit un film à transformer (1),
b) on relie le film à transformer (1) à un moule coulissant (10) ayant au moins un passage (11) de façon que le film (1) et le moule coulissant (10) restent positionnés solidairement l'un par rapport à l'autre au moins jusqu'à l'étape de procédé f),
c) on modifie physiquement ou chimiquement des zones du film à transformer (1),
d) on place le film à transformer (1), relié au moule coulissant (10) dans un outil de moulage, ouvert, ayant au moins une plaque de base (20) et un contre-outil (30) opposé à celle-ci de façon que le film à transformer (1), relié au moule coulissant (10), se place entre la plaque de base (20) et l'outil opposé (30) de façon que le film (1) soit dirigé vers l'outil opposé (30),
e) on ferme l'outil de moulage et on transforme le film (1) à l'aide d'un premier milieu de compression qui moule le film à transformer (1) au moins en partie dans au moins un passage (11) du moule coulissant (10) de façon que le film transformé (1'), prenne au moins en partie la forme d'au moins un passage (11) alors que le second milieu comprimé, liquide ou gazeux qui se trouve dans au moins un passage (11), s'échappe,
f) on extrait le film (1'), transformé, relié au moule coulissant (10) hors de l'outil de moulage modulaire.

2. Procédé selon la revendication 1,
selon lequel
pendant ou après l'étape de procédé f), on sépare le film transformé (1') du moule coulissant (10).

3. Procédé selon la revendication 1 ou 2,
selon lequel
la modification physique ou chimique de zones du film à transformer (1), se fait à travers au moins un passage (11) du moule coulissant (10).

4. Procédé selon la revendication 1 ou 2,
selon lequel
la modification physique ou chimique de zones du film à transformer (1), se fait à travers au moins un passage (16) d'un masque (15) appliqué sur le côté du film à transformer (1), opposé au moule coulissant (10).

5. Procédé selon l'une des revendications 1 à 4,
selon lequel
la modification physique ou chimique de zones du film à transformer (1), se fait par exposition à un rayonnement électromagnétique ou un rayonnement de particules.

6. Procédé selon l'une des revendications 1 à 5,
selon lequel
on utilise un outil de moulage ayant au moins un autre moule coulissant (40) muni d'au moins un passage (41), et au moins cet autre moule coulissant (40) se place dans l'outil de moulage entre le moule coulissant (10) et la plaque de base (20).

7. Procédé selon la revendication 6,
selon lequel
on utilise au moins un autre moule coulissant (40) aligné par rapport au moule coulissant (10) et dont au moins un passage (41) est réalisé de façon que le film à transformer (1) soit transformé au moins en partie par au moins un passage (11) du moule coulissant (10) pour arriver dans au moins un passage (41) au moins de l'autre moule coulissant (40), pour que le film (1') transformé, présente au moins en partie, une forme étagée ou une partie en contredépouille.

8. Procédé selon la revendication 6 ou 7,
selon lequel
le moule coulissant (10) le cas échéant au moins l'autre moule coulissant (40) et la plaque de base (20), sont reliés solidairement lorsqu'on les place dans l'outil de moulage.

9. Procédé selon l'une des revendications 1 à 8,
selon lequel
on choisit la plaque de base (20) pour que son côté tourné vers l'autre outil (30) soit le côté lisse.

10. Procédé selon l'une des revendications 1 à 8,
selon lequel
on choisit la plaque de base (20) pour que son côté tourné vers l'outil opposé (30) présente une texture ou une topologie qui sera transférée au moins en partie au film à transformer (1) pendant l'étape de procédé e).

11. Procédé selon l'une des revendications 1 à 10,
selon lequel
on chauffe et on refroidit simultanément ou séparément au moins un moule coulissant et la plaque de base (20).

12. Procédé selon l'une des revendications 1 à 11,
selon lequel
on choisit le film à transformer (1) pour qu'il soit en matière plastique ou en un mélange de matières plastiques.
